# EUROPEAN PATENT SPECIFICATION

(11) **EP 3 882 865 B1**
(45) Date of publication and mention of the grant of the patent: **01.01.2025**
(21) Application number: 19884357.5
(22) Date of filing: 05.11.2019
(51) Int. Cl.: G06T 1/60

(54) **OBJECT LOADING METHOD, DEVICE, STORAGE MEDIUM, AND ELECTRONIC DEVICE**
OBJEKTLADEVERFAHREN, VORRICHTUNG, SPEICHERMEDIUM UND ELEKTRONISCHE VORRICHTUNG
PROCÉDÉ DE CHARGEMENT D'OBJET, DISPOSITIF, SUPPORT DE STOCKAGE ET DISPOSITIF ÉLECTRONIQUE

(30) Priority: 15.11.2018 CN 201811361060
(43) Date of publication of application: 22.09.2021
(73) Proprietor: Tencent Technology (Shenzhen) Company Limited, Shenzhen, Guangdong, 518057 (CN)
(72) Inventor: WEI, Zhixiao, Shenzhen, Guangdong 518057 (CN)
(74) Representative: AWA Sweden AB
(86) International application number: PCT/CN2019/115611
(87) International publication number: WO 2020/098531

(56) References cited:
- WO-A1-2007/042700
- CN-A- 105 701 851
- CN-A- 106 991 713
- CN-A- 109 523 621
- US-A1- 2006 008 121
- US-A1- 2017 045 941
- YAGEL R ET AL: "VISIBILITY COMPUTATION FOR EFFICIENT WALKTHROUGH OF COMPLEX ENVIRONMENTS", PRESENCE, vol. 5, no. 1, 1 January 1996 (1996-01-01), pages 45 - 60, XP009067323
- COHEN-OR D ET AL: "A survey of visibility for walkthrough applications", IEEE TRANSACTIONS ON VISUALIZATION AND COMPUTER GRAPHICS, vol. 9, no. 3, 1 July 2003 (2003-07-01), pages 412 - 431, XP002400736

## Description

### FIELD OF THE TECHNOLOGY

The present disclosure relates to the field of Internet technologies, and specifically, to an object loading technology.

### BACKGROUND OF THE DISCLOSURE

The concept of three dimensions (3D) is a concept of space composed of three axes X, Y, and Z, comparing with a two-dimensional (2D) plane composed of only length and width.

The construction of a 3D virtual scene is an important application of 3D. For example, a large-scale game is often provided with large scenes with numerous elements such as people, animals, houses, trees, and stones. Each time when updating a frame of the game picture in a gaming process, processes, such as rendering and animation, are performed on each object in the scene. WO2007/042700A1 provides a system and a method for computing visibility of scenes from the current position of an observer, which includes loading on a terminal of a current cell (35) corresponding to the current position of the observer (41) in the scene, calculating the stabbing lines (L1, L2) output from said current cell, loading on the terminal adjacent cells which are intersected by said set of stabbing lines, and repeating the steps for calculating the stabbing lines output from the set of loaded cells, thereby defining a specific set of visible cells of the scene. US2017/045941A1 discloses a display method which includes: receiving captured images of an interactive environment in which a head-mounted display (HMD) is disposed; receiving inertial data processed from at least one inertial sensor of the HMD; analyzing the captured images and the inertial data to determine a current and predicted future location of the HMD; using the predicted future location of the HMD to adjust a beamforming direction of an RF transceiver towards the predicted future location of the HMD; tracking a gaze of a user of the HMD; generating image data depicting a view of a virtual environment for the HMD, wherein regions of the view are differentially rendered; generating audio data depicting sounds from the virtual environment, the audio data being configured to enable localization of the sounds by the user; transmitting the image data and the audio data via the RF transceiver to the HMD.

### SUMMARY

Embodiments of the present disclosure provide an object loading method, an object loading apparatus, a storage medium, and an electronic device as defined in the appended set of claims, to solve at least a technical problem in the related art that a relatively large quantity of hardware resources are occupied to render objects in a virtual scene.

In the embodiments of the present disclosure, a visible space located within an acquisition range of an image acquisition device is determined in a virtual scene, an object whose visible distance is not greater than a visible distance threshold indicated by a target type in a target subspace is acquired as a to-be-rendered object, and the to-be-rendered object is loaded. For visible spaces located at different places, only objects that are actually visible to a user are loaded, so that a technical problem in the related art that a relatively large quantity of hardware resources are occupied to render objects in a virtual scene can be solved, thereby significantly reducing the usage of memory resource, and reducing the consumption of hardware resources of central processing unit (CPU), graphics processing unit (GPU), and the like.

### BRIEF DESCRIPTION OF THE DRAWINGS

To describe technical solutions in the embodiments of the present disclosure or in the related art more clearly, the following briefly describes the accompanying drawings required for describing the embodiments or the related art. Apparently, the accompanying drawings in the following description show merely the embodiments of the present disclosure, and a person of ordinary skill in the art may still derive other drawings from these accompanying drawings without creative efforts.
FIG. 1 is a schematic diagram of a hardware environment of an object loading method according to an embodiment of the present disclosure.
FIG. 2 is a flowchart of an optional object loading method according to an embodiment of the present disclosure.
FIG. 3 is a schematic diagram of grid blocks in an optional scenario according to an embodiment of the present disclosure.
FIG. 4 is a schematic diagram of grid blocks in an optional scenario according to an embodiment of the present disclosure.
FIG. 5 is a schematic diagram of grid blocks in an optional scenario according to an embodiment of the present disclosure.
FIG. 6 is a schematic diagram of grid blocks in an optional scenario according to an embodiment of the present disclosure.
FIG. 7 is a schematic diagram of a coordinate system in an optional scenario according to an embodiment of the present disclosure.
FIG. 8 is a flowchart of preprocessing of an optional scenario according to an embodiment of the present disclosure.
FIG. 9 is a schematic diagram of a bounding box in an optional scenario according to an embodiment of the present disclosure.
FIG. 10 is a schematic diagram of a grid in an optional scenario according to an embodiment of the present disclosure.
FIG. 11 is a schematic diagram of an optional scenario according to an embodiment of the present disclosure.
FIG. 12 is a schematic diagram of an optional scenario according to an embodiment of the present disclosure.
FIG. 13 is a schematic diagram of an optional scenario according to an embodiment of the present disclosure.
FIG. 14 is a flowchart of loading objects of an optional scenario according to an embodiment of the present disclosure.
FIG. 15 is a schematic diagram of an optional object loading apparatus according to an embodiment of the present disclosure.
FIG. 16 is a structural block diagram of a terminal according to an embodiment of the present disclosure.

### DESCRIPTION OF EMBODIMENTS

To make solutions of the present disclosure more comprehensible for a person skilled in the art, the following clearly and completely describes technical solutions in the embodiments of the present disclosure with reference to accompanying drawings in the embodiments of the present disclosure.

The terms such as "first" and "second" in the specification, claims, and accompanying drawings of the present disclosure are intended to distinguish between similar objects rather than describing a particular sequence or a chronological order. It is to be understood that the data termed in such a way are interchangeable in proper circumstances so that the embodiments of the present disclosure described herein can be implemented in orders except the order illustrated or described herein. In addition, the terms "include", "comprise" and any other variants are intended to cover the non-exclusive inclusion. For example, a process, method, system, product, or device that includes a series of steps or units is not necessarily limited to those expressly listed steps or units, but may include other steps or units not expressly listed or inherent to such a process, method, product, or device.

The present disclosure is mainly directed to dynamic loading and continuous display of a large-scale 3D scene on a device having limited capacity. For example, in a computer game, a ultra-large virtual 3D world is displayed for a user. Generally, a 3D scene has a large quantity of points, surfaces, and image data. The large-scale 3D scene simulates a virtual world that is at least several square kilometers, which cannot be completely loaded on the device having limited capacity of processing.

In order to overcome the foregoing problems, according to an aspect of the embodiments of the present disclosure, embodiments of an object loading method are provided. By using the technical solution of the present disclosure, scene content in a visible range in the processing is loaded while ensuring the minimized overhead. The scene content that cannot be seen is unloaded out of hardware resources such as a memory. The scene content appears smoothly, that is, there is no visual freeze caused by sudden appearance of visual items.

The object loading method provided in the embodiments of the present disclosure may be applied to an image processing device, such as a terminal device or a server. The method may be applied to the terminal device. The terminal device, for example, may be a smart terminal, a computer, a personal digital assistant (PDA), a tablet computer or the like. The method may be applied to the server. The server may be an independent server or may be a server in a cluster.

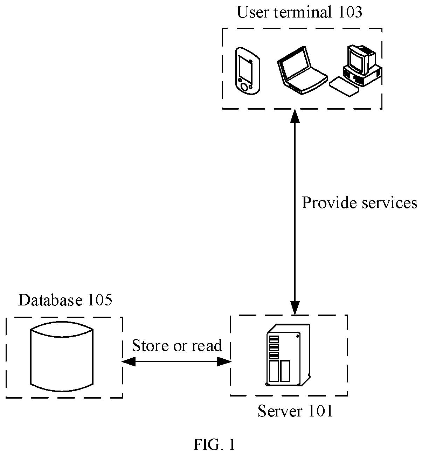

For example, in this embodiment, the object loading method may be applied to a hardware environment as shown in FIG. 1 composed of a server 101 and/or a user terminal 103. As shown in FIG. 1, the server 101 is connected to the user terminal 103 by a network, and may be configured to provide services (for example, game services, application services, and the like) to the user terminal or a client installed on the user terminal. A database 105 may be arranged on the server or independently of the server, and may be configured to provide data storage and data reading services to the server 101. The network includes, but is not limited to, a wide area network, a metropolitan area network or a local area network. The user terminal 103 may include, but is not limited to, a personal computer (PC), a mobile phone, a tablet computer or the like.

The object loading method of this embodiment of the present disclosure may be performed by the user terminal 103. The object loading method performed by the user terminal 103 in this embodiment of the present disclosure may be performed by a client installed on the terminal. In an application scenario of the present disclosure, software of a target application may be used to render a large 3D scene (for example, scene rendering in a large-scale 3D game, a 3D animation or VR display) on various computer devices (including, but not limited to, a PC, a mobile phone, a tablet computer, an embedded device, a server, a game console, and the like). The rendering herein may be understood as a process of a computer processing digital art content and drawing the content on a display device. The application scenarios of the technical solution of the present disclosure include, but are not limited to, the following scenarios.
1) In social applications that use augmented reality (AR), virtual reality (VR), and the like, after a user logs in, if a large quantity of objects (for example, landscape, buildings, other users, user pets, and the like in a scene) appear in the field of view of the user, it is required to occupy a large quantity of performance resources for a long time to render images of the objects (such as an operation of loading object information in the memory, and rendering operations performed by a CPU or a GPU). In this case, the technical solution of the present disclosure may be used to select objects that are visible to the current user from the large quantity of objects, and load and render the visible objects, thereby achieving the purpose of reducing hardware resources (for example, the CPU, memory, and GPU) occupied by the image rendering.
2) In game applications, when a player is playing a game, a large quantity of objects such as other player characters, non-player characters (NPC), landscapes, buildings, and the like may suddenly appear in the field of view of the player. In this case, the limited performance resources of the terminal are mostly occupied by rendering operations, resulting in a great decrease in available performance resources of the terminal. The user may feel that the terminal freezes or responds slowly, or drops frames, or the like. In this case, the technical solution of the present disclosure may be used to select objects that are visible to the current user from the large quantity of objects, and load and render the visible objects, thereby achieving the purpose of reducing hardware resources occupied by the image rendering.
3) In military warfare, medical and other simulation applications, using military warfare simulation applications as an example, when there are a large quantity of objects such as military personnel, military equipment, and military scenes in a field of view, a terminal may select objects that are visible to the current user from the large quantity of obj ects, and load and render the visible objects, thereby reducing hardware resources occupied by the image rendering.

The scenarios in the foregoing embodiments generally have the following characteristics. A large-scale 3D scene (generally more than several square kilometers) needs to be rendered, and there are numerous objects (generally more than tens of thousands objects) and complex details. Some products even need to simulate a real ultra-large world that seems boundless. Actually, capacity of memory and processor in a device is limited, especially in a mobile device, so that the entire scene cannot be completely loaded and processed. It is required to dynamically load the visible scene area and unload the invisible scene area, to implement rendering. The purpose of the present disclosure is to provide a solution to dynamically load and unload scene areas in such products, and provide an optimal solution to minimize the memory usage in the dynamic loading and unloading process while smoothly displaying new objects entering the view.

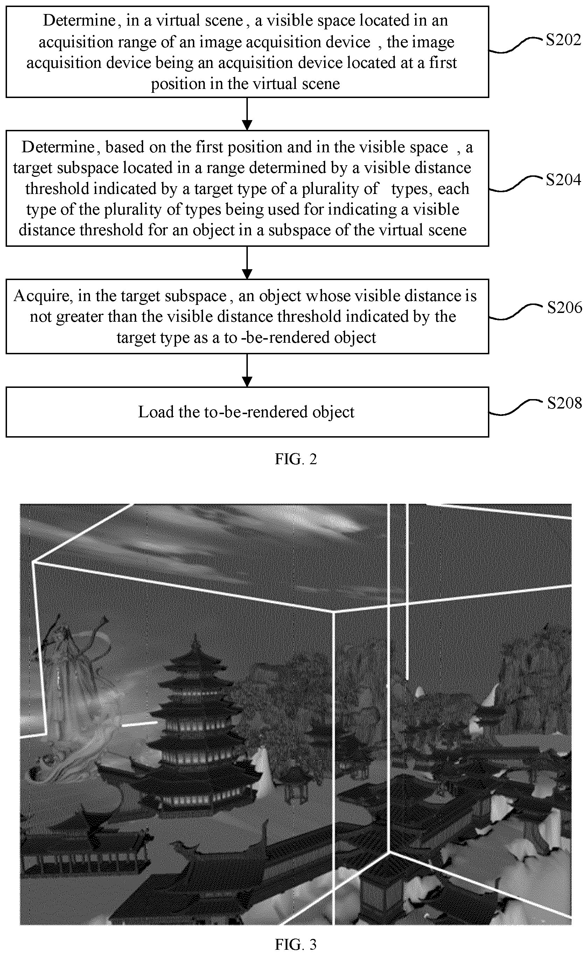

Next, by an example that a user terminal is used as an image processing device, an object loading method provided in the embodiments of the present disclosure is described. FIG. 2 is a flowchart of an optional object loading method according to an embodiment of the present disclosure. As shown in FIG. 2, the method may include the following steps S202 to S208.

In step S202, a user terminal determines, in a virtual scene, a visible space located within an acquisition range of an image acquisition device, the image acquisition device being an acquisition device located at a first position in the virtual scene.

The foregoing virtual scene may be a virtual scene provided by a target application. The foregoing target application may be an application using AR and VR, for example, a social application, a game application, a military warfare simulation application or a medical simulation application. The target application may be installed on the user terminal to form a client. The virtual scene may be a social scene, a game scene, a simulation scene or the like. These scenes may be displayed through the client on the user terminal.

The foregoing image acquisition device may be a virtual image acquisition device, which is configured to simulate a first-person viewing angle or a third-person viewing angle (the viewing angle may also be referred to as the angle of view, which is used for quantifying the angle of view of an observer, i.e., a user who is observing the scene at the current position) for image acquisition. That is, the visible range of the image acquisition device is a visible range of the user. The image acquisition device may be specifically a functional component invoked in a rendering engine, for example, a camera Camera in a game engine Unity.

The foregoing virtual scene is a 3D scene, that is, the content of the virtual scene simulated, calculated, and drawn on a display device by using a computer device (for example, the foregoing server or user terminal). The virtual scene may be divided into several subspaces (or referred to as a grid) at an interval unit (for example, an interval of 1 meter or 10 meters). The foregoing visible space is a set of subspaces (which may include at least one subspace) located in the acquisition range of the image acquisition device. For example, an acquisition distance of the image acquisition device is given, so that the subspace in the acquisition distance may be determined as the visible space.

In step S204, the user terminal determines, based on the first position and in the visible space, a target subspace located within a visible distance threshold indicated by a target type of a plurality of types, each type of the plurality of types being used for indicating a visible distance threshold for an object in a subspace of the virtual scene.

In step S206, the user terminal acquires in the target subspace an object whose visible distance is not greater than the visible distance threshold indicated by the target type as a to-be-rendered object.

Each object in the virtual scene (for example, scene objects such as landscapes, buildings, other users and pets) has a particular visible distance (that is, the maximum distance at which the object can be seen). In other words, the object becomes invisible to the user if the user is at a distance to the object exceeding the visible distance of the object. The foregoing each type of the plurality of types corresponds to a visible distance threshold. That is, the subspaces of the virtual scene are categorized according to the visible distance. For a subspace of a type, objects whose visible distances are greater than the corresponding visible distance threshold may be filtered out in the same manner, thereby obtaining objects whose visible distances are less than or equal to the visible distance threshold, that is, objects in the target subspace. Only objects that are actually visible to the user are obtained.

In step S208, the to-be-rendered object is loaded. For example, the user terminal may load the to-be-rendered object in a storage resource of the user terminal where the target application is installed. The user terminal is configured to render an image of the virtual scene. The rendering herein refers to a process of a computer device processing digital art content and drawing the content on a display device.

Compared with the related art that objects in the entire scene are loaded or all objects in a visible range of the user are loaded, in the technical solution of the present disclosure, only objects that are visible to the user are loaded, thereby significantly reducing requirements on memory (that is, the memory required for loading the objects is reduced). In addition, objects processed by the CPU and the GPU are reduced, thereby reducing the consumption of hardware resources of the CPU and the GPU.

The foregoing embodiment is described by using an example that the object loading method of the embodiments of the present disclosure is performed by the user terminal 103. The object loading method of the embodiments of the present disclosure may be alternatively performed by the server 101, which differs from the foregoing embodiments only in that the execution object is a server instead of a user terminal. The object loading method of the embodiments of the present disclosure may be alternatively jointly performed by the server 101 and the terminal 103.

Through the foregoing steps, a visible space located within an acquisition range of an image acquisition device in a virtual scene provided by a target application is determined; a target subspace located within a visible distance threshold indicated by a target type of a plurality of types in the visible space is determined based on the first position; an object whose visible distance is not greater than the visible distance threshold indicated by the target type in the target subspace is acquired as a to-be-rendered object; and the to-be-rendered object is loaded in a storage resource of the user terminal where the target application is installed. Because only the objects actually visible to a user are loaded, the technical problem in the related art that a relatively large quantity of hardware resources are occupied to render objects in a virtual scene can be solved, thereby significantly reducing the usage of memory resources, and reducing the consumption of hardware resources of CPU and GPU.

The present disclosure automatically processes a large-scale 3D scene (that is, the foregoing virtual scene) into a detailed grid structure with a plurality of levels (each level may be considered as a type, and the plurality of levels correspond to the foregoing plurality of types). Different levels of the grid correspond to different grid densities and sizes. An item is placed in an appropriate level according to a visible distance thereof. In the loading process, for each detail level, items in the grid blocks around an observation position are dynamically loaded and unloaded by determining the visibility of the grid blocks. The technical solution of the present disclosure is described in detail with reference to steps shown in FIG. 2 by using an example that the technical solution of the present disclosure is applied to a game scene.

In the technical solution provided by S202, after the user enters a game application, the user terminal determines the visible space located in the acquisition range of the image acquisition device (that is, to be displayed to the user), in a virtual scene provided by the target application, the image acquisition device being the acquisition device located at the first position in the virtual scene and used for simulating the field of view of the user.

To select the visible space located in the visible range of the user from the entire virtual scene, in the technical solution of the present disclosure, visibilities of scene items may be quantified and organized in a spatial data structure in advance. The structure ensures that more detailed scene item is loaded with a smaller range. The number of space areas in the large-scale scene that are loaded or unloaded at the same time is always less than a particular number. Most items are not included in a visibility determination and loading process. Therefore, while ensuring that the items in the visible range are accurately loaded, data loaded into the device are minimized. The process is described in detail with reference to the following step 1 and step 2.

In step 1, before determining the visible space located in the acquisition range of the image acquisition device in the virtual scene provided by the target application, the user terminal determines the grid density corresponding to the each type of the plurality of types. In other words, each type of the plurality of types is used for representing a grid density (that is, a spatial division granularity of the virtual scene). Therefore, a quantity of types is equal to a quantity of grid densities.

Optionally, the user terminal may determine the grid density corresponding to the each type of the plurality of types by the following step 11 and step 12.

In step 11, the user terminal acquires a maximum visible distance and a minimum visible distance among visible distances of all objects in the virtual scene.

In the process that the user terminal acquires the maximum visible distance and the minimum visible distance among the visible distances of all the objects in the virtual scene, the visible distance of each object in the virtual scene may be acquired in the following manner: predetermining a minimum visible screen occupation ratio Smin (that is, a preset parameter) of the object, calculating a product of a screen occupation ratio threshold (also referred to as the visible screen occupation ratio Smin) and twice the tangent value of a target viewing angle of the image acquisition device, the product being denoted as a second product, calculating a product of the greatest value of coordinates of the object in three dimensions in a three-dimensional coordinate system (that is, the greatest value of the coordinates on the X-axis, Y-axis, and Z-axis) and a preset parameter (the preset parameter may be a preset positive parameter, for example, 1.1), the product being denoted as a first product, and then calculating a ratio of the first product to the second product of the object, the ratio being the visible distance of the object. After the visible distance of each object is calculated in the foregoing manner, the maximum visible distance and the minimum visible distance can be found in the visible distances of all the objects in the virtual scene.

In the foregoing embodiment, for the screen occupation ratio of the object, it is assumed that the length and width of an area occupied by the object finally rendered on the screen are respectively h pixels and w pixels, and the current length and width of an entire screen are respectively Sh pixels and Sw pixels. The smaller value of h/Sh and w/Sw is used as the current screen occupation ratio of the object. The minimum visible screen occupation ratio is the minimum screen occupation ratio of the object visible to the user.

In step 12, the user terminal determines the grid density corresponding to each type of the plurality of types according to the maximum visible distance and the minimum visible distance.

The purpose of the user terminal obtaining the maximum visible distance Dmax and the minimum visible distance Dmin among the visible distances of all the objects is to equally divide a difference between the maximum visible distance and the minimum visible distance. Optionally, the quantity of equal divisions herein may be predetermined as m, that is, the value of m is predetermined. The visible distance corresponding to the i^{th} (the value of i is greater than or equal to 1 and less than or equal to m+1) type is Dmin+i*(Dmax-Dmin)/m.

Optionally, the quantity of equal divisions herein may be determined according to the maximum visible distance Dmax and the minimum visible distance Dmin. For example, in the process of determining the grid density corresponding to each type of the plurality of types according to the maximum visible distance and the minimum visible distance, a ratio of the maximum visible distance to the minimum visible distance is rounded down to obtain a first threshold (that is, the quantity of the equal divisions, which can be represented by n herein). The first threshold may be also used for representing the quantity of types of the plurality of types. Then the value of (the maximum visible distance Dmax - the minimum visible distance Dmin)/the minimum visible distance Dmin is calculated as the target distance. A grid spacing represented by the grid density corresponding to the i^{th} type of the plurality of types is set to be i times the target spacing, i being an integer greater than 0 and less than or equal to the first threshold.

In the present disclosure, the user terminal may divide the virtual space into multi-level grid in different manners. For example, loading distances of all levels in the multi-level grid are used to define a sequence Dsequence = {Dl, Dl*2, Dl*3, ..., Dl*n}. Certainly, another type of distance sequence may be defined. Although there may be differences in loading and unloading effects, it is noted that regardless of spacing relationship in the distance sequence of the multi-level grid, all solutions including a grid of a plurality of levels of loading distances, with or without spacing relationship of the loading distances, are similar to the solution of this embodiment.

Optionally, the user terminal may determine loading distances of the objects in other manners, which is not necessarily the manner of *D* =1.1* max(*Bx*, *By*, *Bz*) /(2 * *S* min* tan(*fov*/ 2)). It is noted that all the solutions including the determination of the loading distances of the objects and the loading using the multi-level detail grid based on the loading distances are similar to the solution of this embodiment.

In step 2, the user terminal creates, for each type of the plurality of types, configuration information according to the grid density corresponding to the type of the plurality of types, and saves the configuration information of each type of the plurality of types to a configuration file. The configuration information records for each subspace obtained by division according to the grid density corresponding to the configuration information, an object in the subspace and a second position of the subspace.

Optionally, after the user terminal determines the grid density corresponding to each type by the forgoing steps, the process of creating, for each type of the plurality of types, the configuration information according to the grid density corresponding to the type of the plurality of types may include the following step 21.

In step 21, the user terminal determines the subspace (each grid is equivalent to a subspace) acquired by division according to the grid density corresponding to each type of the plurality of types in the virtual scene. That is, for each type, the entire virtual scene may be divided according to the grid density corresponding to the type, and the grid block in the virtual scene is sequentially coded (each block is equivalent to a unit in the three-dimensional space). For each type, he user terminal searches in each subspace in the virtual scene for an object whose visible distance matches the visible distance threshold indicated by the type. For the i^{th} type, an object whose visible distance is in a range of [i*Dmin, (i-1)Dmin) may be determined as an object that matches the visible distance threshold indicated by the i^{th} type. Meanwhile, the grid where the object is located in the virtual scene may be determined, and an association relationship between each subspace and a found object is saved in a piece of configuration information. For each type of the plurality of types, a piece of configuration information is saved to record all the objects in the grid of the grid density corresponding to the type.

In an optional embodiment, if there is no visible object in a grid of a grid density corresponding to a type, configuration information for this type may be deleted to save storage space.

In the technical solution of S204, the user terminal determines, based on the first position and in the visible space, the target subspace located within the visible distance threshold indicated by the target type of the plurality of types, each type of the plurality of types being used for indicating the visible distance threshold for the object in a subspace of the virtual scene.

The foregoing target type is any type of the plurality of types. In other words, for each type, there may be a corresponding target subspace. That is, for the i^{th} type, a subspace whose distance to the first position is less than i*Dmin may be determined as the target subspace corresponding to the i^{th} type.

Optionally, the process that the user terminal determines the target subspace located in the visible distance threshold indicated by the target type of the plurality of types in the visible space based on the first position may be implemented in the following manner.

Optionally, the user terminal may acquire a spacing distance between a subspace of the visible space and the first position; and determine, in the visible space, a subspace whose spacing distance to the first position is not greater than the visible distance threshold indicated by the target type as the target subspace.

In the technical solution of S206, the user terminal acquires in the target subspace the object whose visible distance is not greater than the visible distance threshold indicated by the target type as the to-be-rendered object.

In this embodiment, the process that the user terminal acquires in the target subspace the object whose visible distance is not greater than the visible distance threshold indicated by the target type as the to-be-rendered object may be implemented in the following manner. The user terminal acquires a configuration file recording objects associated with each type of the plurality of types in the subspace (or referred to as a grid) of the virtual scene that is divided according to the foregoing grid density, each object in the subspace of the virtual scene being set to be associated with a type of the plurality of types whose visible distance is not greater than the indicated visible distance threshold; and acquires an object that is recorded in the configuration file as associated with the target type in the target subspace as the to-be-rendered object.

When the user terminal determines the to-be-rendered objects according to the objects in the visible space which are recorded in the configuration file as being associated with the target type, all the objects in the visible space which are associated with the target type may be determined as the to-be-rendered objects.

In the technical solution of S208, the user terminal loads the to-be-rendered object in the storage resource of the user terminal where the target application is installed, the user terminal being configured to render an image of the virtual scene. The rendering herein refers to the process of the computer device processing digital art content and drawing the content on the display device.

Optionally, when the user terminal loads the to-be-rendered object in the storage resource of the user terminal where the target application is installed, in a case that objects currently saved in the storage resource of the user terminal include the to-be-rendered object, the to-be-rendered object is remained in the storage resource of the user terminal, and objects other than the to-be-rendered object in the storage resource of the user terminal are deleted. That is, in a case that some or all objects in current rendering are the same as those in previous rendering, only to-be-rendered objects that are not included in the previous rendering need to be loaded, and objects that need to be rendered in the previous rendering but do not need to be rendered in the current rendering are deleted. In a case that the objects currently saved in the storage resource of the user terminal do not include the to-be-rendered object, objects that are saved in the storage resource of the user terminal are deleted, and the to-be-rendered object is loaded to the storage resource of the user terminal. That is, in a case that the objects for the current rendering are totally different from those for the previous rendering, all the objects in the previous rendering are directly deleted, and the to-be-rendered objects of the current rendering are then loaded.

Optionally, after the user terminal loads the to-be-rendered object in the storage resource of the user terminal where the target application is installed, the target subspace is set to have a grid density matching the grid density corresponding to the target type, and the to-be-rendered object is rendered in the set target subspace. Any type of the plurality of types indicates rendering an object whose visible distance is not greater than the visible distance threshold indicated by the any type in the subspace of the virtual scene according to the grid density corresponding to the any type. The grid density corresponding to a first type of the plurality of types is greater than the grid density corresponding to a second type of the plurality of types, and the visible distance threshold indicated by the first type is less than the visible distance threshold indicated by the second type.

By using the technical solution of the present disclosure, the user terminal quantifies visible distances of all the items in the scene and organizes the items in a data structure of a multi-level scene grid. The visible distance of the item is used as a basis. When the program is run, in a range of a fixed quantity of grids around an observation position of each level, the visibility of items is determined for loading. Because tiny items are in a scene grid having a small scale, the scope for determining the visibility of detailed items is small, and the amount of detailed items loaded into the memory is small, thereby reducing the occupation of resources of system storage, CPU, and GPU.

As an optional embodiment, the technical solution of the present disclosure is further described in detail by using an example that the technical solution of the present disclosure is applied to a virtual scene of a game.

In related technical solutions for loading a large 3D scene, for example, in the engine Unity3D, a large scene is manually divided into several separate small to-be-made scenes simply according to spatial positions. The small scenes are dynamically loaded and unloaded when the program is run. In the engine UnrealEngine4, a large scene is manually divided into several sub-levels. Each sub-level may be individually set with a loading distance and items in the scene. There is no necessary spatial relationship between the sub-levels. The loading distance of the each sub-level is traversed to determine loading and unloading of the sub-level when the program is run.

The full-scene loading method is adopted in the foregoing related technical solutions. The occupation of memory is a bottleneck for a device loading an ultra-large scene. In mainstream commercial game engines such as Unity3D and UnrealEngine4, although these solutions can achieve the accuracy of loading items in the large scene, these solutions cannot minimize the device memory used by the scene, resulting in excessive loading.

The applicant realizes that, ideally only visible items need to loaded, thereby ensuring the accuracy of loading while minimizing the consumption of hardware resources. In the solutions in the related art, loading or editing are performed on the basis of spatial positions. However, there are objects having different volumes and levels of detail in the same space area. At a given observation distance, objects having different volumes and details have different visibilities. The loading of the entire related area causes unnecessary waste of memory.

If the scene is manually divided into sub-scenes, when the scene reaches a particular scale, the time consumed by manual division is unbearable, and it is very difficult to accurately place items in the most suitable grid. In the solution, an algorithm is used to automatically divide the scene into the multi-level grids on the basis of visible distance of the items, which is more accurate and labor saving.

The core concept of the technical solution of the present disclosure is that the loading distance of a scene item is related to the visible distance of the item. The loading is performed not based on the spatial positions, but instead based on the visible distances of the items. First, visible distances of all the items in the scene are quantified and organized in a data structure of the multi-level scene grid. When a program is run, in a scope of a fixed quantity of grids around an observation position of each level, the visibility of items is determined for loading. Because tiny items are in a scene grid having a small scale, the scope for determining the visibility of the detailed object is small, and thus the amount of detailed objects loaded to the memory is small. This also conforms to a rule that a small item has a small visible distance.

The solution mainly includes two stages of implementation. The first stage is a preprocessing of a scene. The second stage is to dynamically load and unload a part of the processed scene. Next, the description is made by using an example that a user terminal is used as an image processing device.

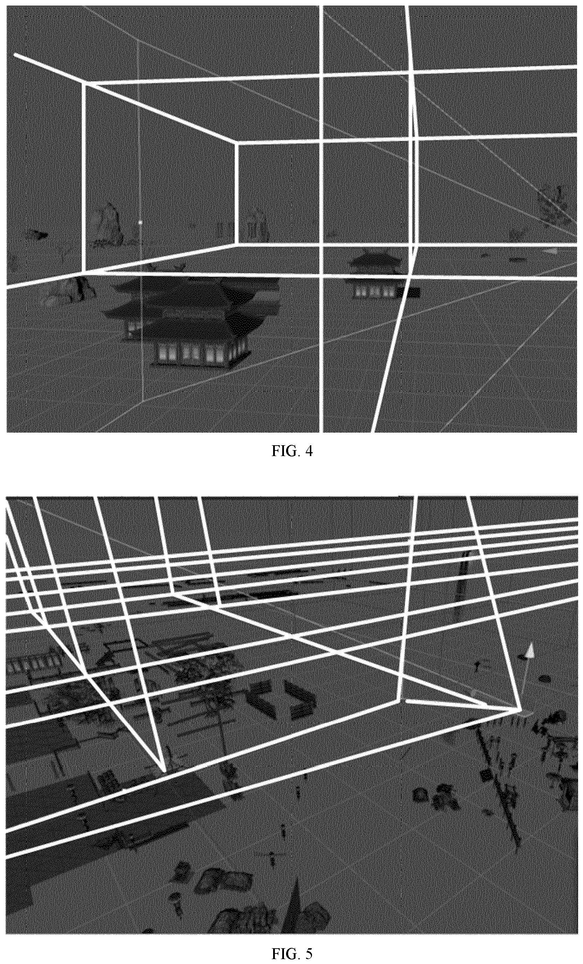

In a preprocessing process of the user terminal, a scene may be automatically processed into a multi-level detail grid structure described in the present disclosure. The solution of processing a scene into a multi-level detail grid is an important part of the present disclosure, which facilitates the loading of a scene according to the levels of detail of items in dynamic loading, to minimize resources occupied by the device for loading. A result of the preprocessing of the scene is that each object in the scene is grouped to a spatial block of a level L. For example, FIG. 3 to FIG. 6 show scene items included in different levels of grid blocks. Scales of grids shown from FIG. 3 to FIG. 6 gradually decrease. It can be seen that when the scale of the grid is small, the sizes of the scene items included in the grid are small and the loading distances of the scene items are small. A level having a relatively large scale of grids includes more coarse-grained scene items. A level having a relatively small scale of grids includes more detailed scene items.

The following definitions are used in the expressions of the following calculation steps.

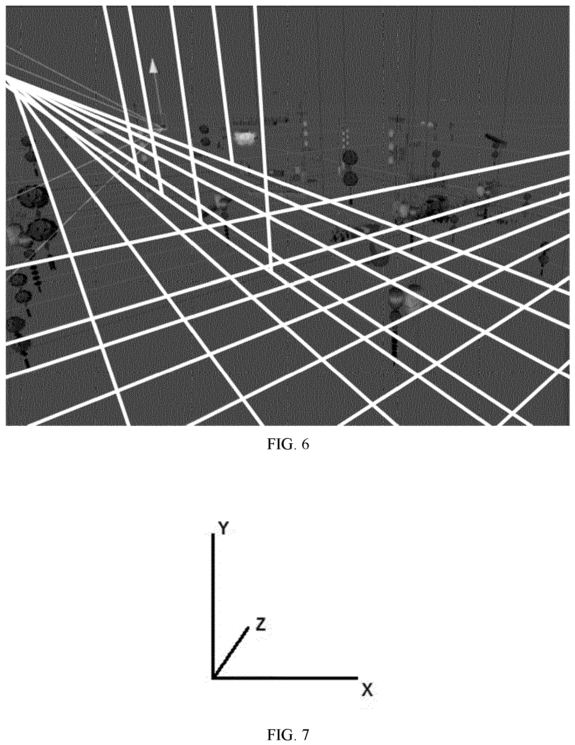

The coordinate system used in the solution of the present disclosure may be a 3D Cartesian coordinate system. As shown in FIG. 7, three axes of the coordinate system are X-axis, Y-axis, and Z-axis.

max(n0, n1, n2, ...) represents calculating the maximum value in this sequence n0, n1, n2, ....

tan(x) represents calculating the tangent value of x (in radians).

floor(x) represents the maximum integer in all integers that are not greater than x.

ceil(x) represents the minimum integer in all integers that are not less than x.

abs(x) represents the absolute value of x.

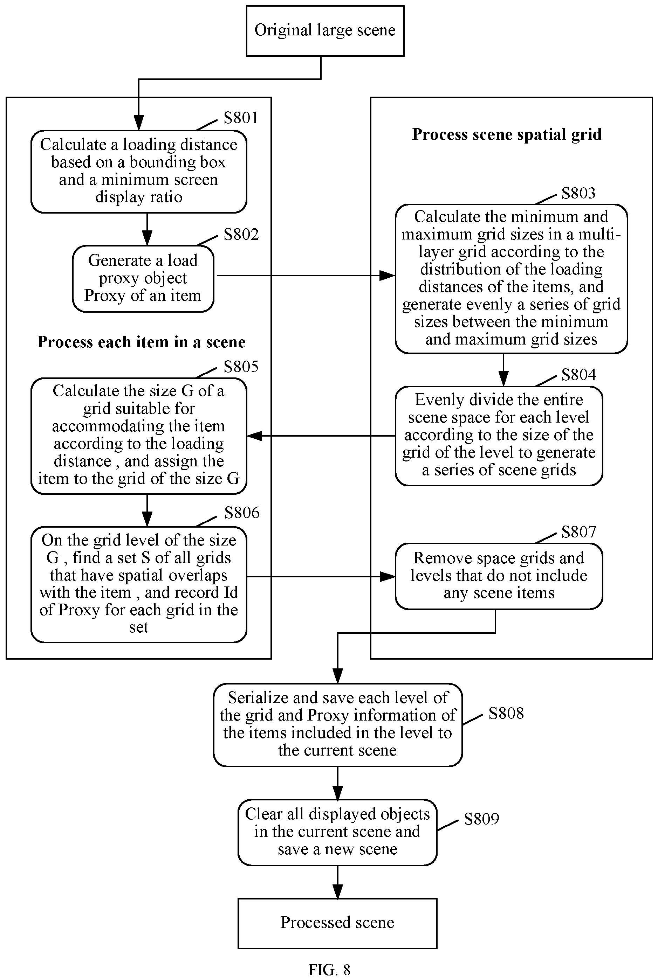

A procedure of the stage of preprocessing a scene by a user terminal is shown as a flowchart in FIG. 8. The left side of the flowchart shows that the user terminal processes each item (or referred to as an object) in the scene, and the right side of the flowchart shows that the user terminal processes scene space grids.

Detailed steps are described as follows.

In step S801, the user terminal calculates a loading distance based on a bounding box and a minimum screen display ratio (that is, the smallest screen occupation ratio).

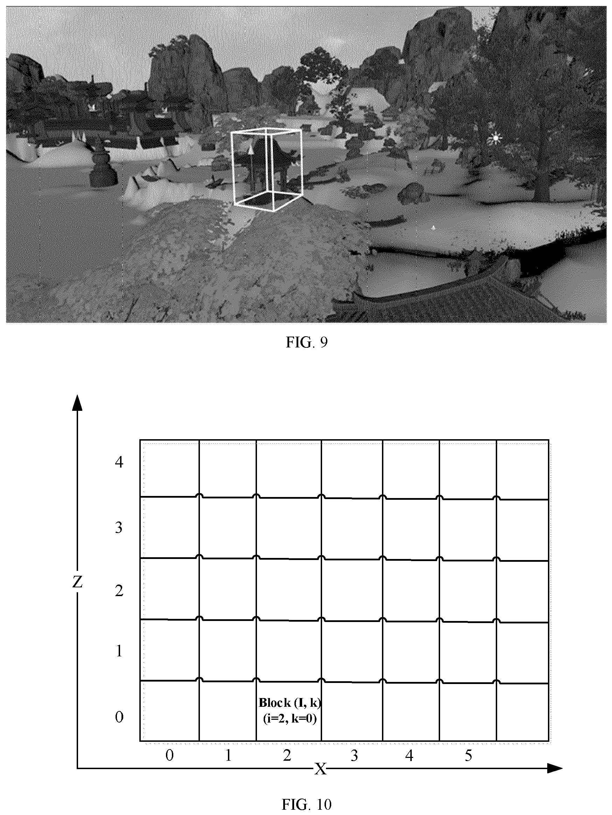

An input of the preprocessing may be a scene resource object in an original large scene edited by art designers by using various scene editors. Scene resources are composed of a plurality of scene items. A scene item is a relatively independent entity of object to be rendered (for example, a stone, a tree, a building or the like) in a scene. The scene item usually includes a world coordinate position P in the scene where the scene item is located. P may be represented by using a three-dimensional coordinates (Px, Py, Pz). In addition, each scene item further includes a bounding box Bounds (xmin, ymin, zmin, length, height, width) and the minimum visible screen occupation ratio Smin. Usually in rendering, it may be considered that if a current screen occupation ratio of an object is less than Smin, the item is invisible (for example, an object that is far away from an observation position has a small screen occupation ratio). A large scale of the scene means that an area where the items are distributed in the scene is very large, which may be more than several kilometers, and the quantity of items in the scene is large, which is usually greater than tens of thousands. FIG. 9 shows a typical input scene. A cube in FIG. 9 represents a bounding box of this building.

A bounding box of an object, that is, a smallest cube surrounding an object is referred to as the bounding box of the object. The bounding box of the object may be represented as a 6-element value Bounds (xmin, ymin, zmin, length, height, width). The parameters xmin, ymin, and zmin respectively represent the minimum values of the area of the bounding box on the world axes x, y, and z. The parameters length, height, width respectively represent span lengths of the area of the bounding box in three directions of the world axes x, y, and z.

In step S802, a load proxy object Proxy of an item is generated.

The user terminal traverses all the items in the scene, and calculates a loading distance D for each traversed item. It is assumed that the view angle of a current observation position is fov (in unit of radian), and a calculation method of D is defined as *D* = 1.1* max(*Bx*, *By*, *Bz*) /(2 * *S* min* tan(*fov*/ 2)), which means that when a distance between the item and the observation position is greater than D, the item is considered invisible. The calculation of D is related to the current observation position and the minimum screen occupation ratio of the item.

The user terminal traverses all the items in the scene, and generates a load proxy object for each traversed item. Proxy may include the following elements in the parentheses (Path, P, R, S, D, B, id), where Path represents a resource path of this item, D represents a loading distance, P represents a position in the scene, R represents rotation, S represents scaling, B represents a bounding box, and id represents the unique identifier of this scene item.

In step S803, the minimum and maximum grid sizes Gmin and Gmax in a multi-layer grid are calculated according to the distribution of the loading distances of the items, and a series of grid sizes {Gmin, Gmin*2, Gmin*3, ..., Gmax} is evenly generated.

The user terminal calculates the loading distances of all the scene items to find the minimum loading distance Dmin and the maximum loading distance Dmax. A set of sequence Dsequence ={Dl, Dl*2, Dl*3, ..., Dl*n} is generated according to Dmin and Dmax, where *n = ceil*(*Dmax* / *D* min), and D1 may be Dmin. The size of the bounding box Bscene of the entire scene is calculated. The size of Bscene is the size of the smallest cube that can surround all the objects in the scene. The 6-element value of Bscene is represented as (Bscene_x, Bscene_y, Bscene_z, Bscene_length, Bscene_height, Bscene_width).

In step S804, for each level, the entire scene space is evenly divided according to the size of the grid of the level to generate a series of scene grids.

The user terminal generates a set of grid levels based on Dsequence. Each element Di (where 1 <= I <= n) in Dsequence represents the i^{th} level of grid. The following operations are performed for each level. On the l^{th} level, the scene is evenly divided into a grid structure shown in FIG. 10, which is composed of a plurality of blocks. A block that is in the i^{th} column in the x-axis direction and in the k^{th} row in the z-axis direction is represented as Block(l, i, k). Each Block includes at least two elements, i.e., an id list of proxy objects of scene items included in the block, and the bounding box Bounds(l, i, k) of the block. The 6-element value of Bounds(l, i, k) is represented as [(i+0.5)*Dl+Bscene_x, Bscene_y, (k+0.5)*Dl+Bscene_z, Dl, Bscene_height, Dl].

In step S805, the size G of a grid suitable for accommodating the item is calculated according to the loading distance, and the item is assigned to the grid of the size G.

The user terminal traverses all proxy objects Proxy in the scene. First, the grid level L where the item is located is selected according to the loading distance D thereof. L is the smallest one in all the elements that are greater than or equal to D in the Dsequence.

In step S806, on the grid level of the size G, a set S of all grid blocks that have spatial overlaps with the item is determined, and Id of Proxy of the item is recorded in each grid block in the set.

Next, the user terminal traverses all blocks on the L^{th} level and calculates an overlap ratio S between the bounding box Bounds(l, i, k) of each block and the bounding box B of the proxy object Proxy. The calculation of an overlap ratio between the two bounding boxes is to calculate their overlapped space area. If S > 0, it indicates that the scene item related to the proxy object is in the area of this block Block(l, i, k). If the overlap ratio S between Block(l, i, k) and Proxy is greater than 0, Id of Proxy is recorded in the id list of this Block(l, i, k).

In step S807, space grid blocks and levels that do not include any scene items are removed.

The user terminal traverses each spatial block Bounds(l, i, k) of each level of the grid to find the block whose id list content is empty and deletes the block. Each level of the grid is traversed and the level whose quantity of spatial block is 0 is deleted.

In step S808, each level of the grid and Proxy information of the items included in the level are serialized and saved to the current scene.

The user terminal saves all current remaining spatial grid blocks Bounds(l, i, k) to a scene file.

In step S809, all display objects in the current scene are cleared and the scene is saved as a new scene (i.e., the processed scene).

The user terminal saves Proxy information of all the proxy objects to the scene file, clears all the scene items in the scene, and saves the scene as a new scene file.

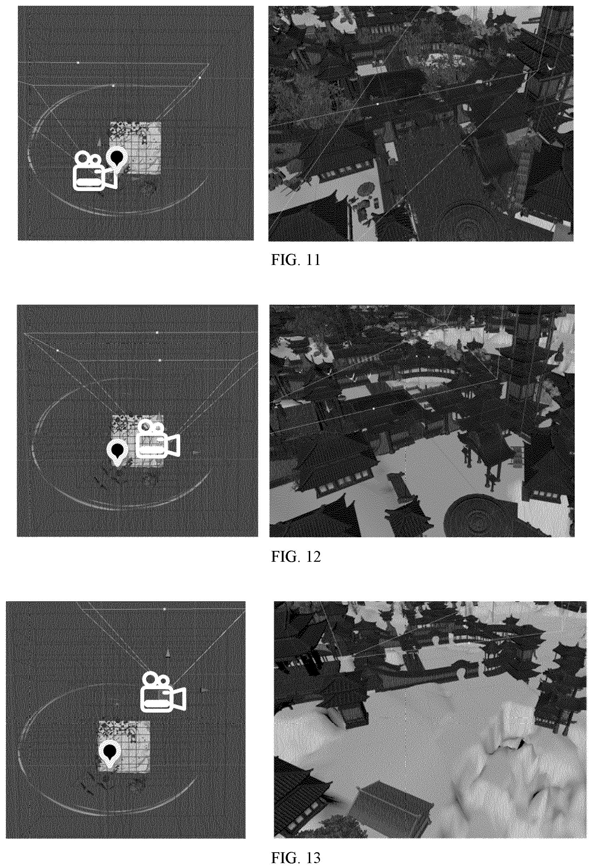

When the solution of the present disclosure is run, in part of the solution, after being preprocessed, a scene may be dynamically loaded or unloaded. That is, a currently visible item is accurately found according to the position of a current observer (or a camera position) and loaded. For the loading and unloading process of the scene with the observation position, reference may be made to FIG. 11 to FIG. 13, which show a fixed area of the scene. As the observation position (camera) moves in the scene, items loaded in this scene area change. As shown in FIG. 11 to FIG. 13, a change trend is that when the observation position is closer to this area, the detail level of this area is richer, and when the observation position is farther away from this area, only tall objects tend to be remained in this area. It is consistent with the actual case, that is, when going far away from an area, only obvious objects in the area can be seen, and detailed objects gradually disappear. Compared with a scene loading method that does not consider a space detail level, the present solution can minimize the quantity of the items loaded in the current scene.

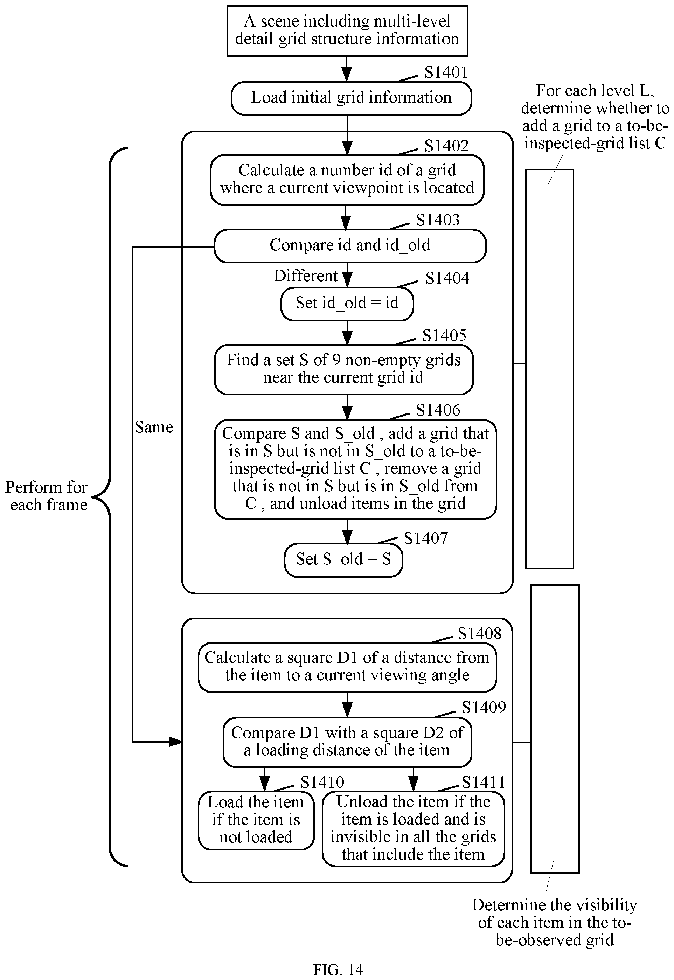

In a scene loading stage, a loading and unloading process is shown as the flowchart in FIG. 14. The processing in the flowchart is performed for each frame. A processing for each frame includes two parts. In the first part, a currently visible scene grid is determined based on the viewpoint from all levels of grid, and is added to an inspection list. In the second part, it is determined, according to a loading distance of each item in the inspection list, whether the item needs to be loaded.

An optional implementation is as follows.

In step S1401, a user terminal loads initial grid information for a scene including multi-level detail grid structure information.

When a program is started (or a scene is initialized), the user terminal loads a scene file and saves all spatial grid blocks Bounds(l, i, k) and scene item proxy objects Proxy of a current scene to a memory.

For each frame generated by the running program (or periodically), the following third step and the following procedures are performed.

First, for each level L, it is determined whether to add the grid to an inspection list C.

In step S1402, the user terminal calculates a serial number id of a current grid where a current viewpoint is located.

In step S1403, the user terminal determines whether the current id is the same as id_old. If id is the same as id_old, S1408 is performed, and if id is not the same as id_old, S1404 is performed.

In step S1404, the user terminal sets id_old = id.

In step S1405, the user terminal finds a set S of 9 non-empty grids near the current grid id.

In step S1406, the user terminal compares S and S_old, adds a grid that is in S but is not in S-old to the to-be-inspected-grid list C, removes a grid that is not in S but is in S_old from C, and unloads items in the removed grid.

In step S1407, the user terminal sets S_old = S.

In the foregoing solution, 3D coordinates of a current observation position may be obtained as Location. The following calculations are performed by traversing current each level of grid. On the l^{th} level of grid, scene grid coordinates P_location where the Location is located are calculated. A grid number Li of P_location on the x-axis calculated by floor((Location.x-Bscene_x)/Dl), and a grid number Lk on the z-axis is calculated by floor((Location.z-Bscene_z)/Dl). All grid blocks Block(l, i, k) that meet abs(Li-i) <= 1 and abs(Lk-k) <= 1 are found. All Proxy recorded in id lists of the found blocks are added to a to-be-loaded list LoadList of the current scene.

The visibility of each item in the to-be-inspected grid is determined.

In step S1408, the user terminal calculates a square D1 of a distance from the item to a current viewing angle.

In step S1409, the user terminal compares D1 with a square D2 of a loading distance of the item.

In step S1410, if the comparison result is that D1 is less than or equal to D2, the item is loaded if the item is not loaded yet.

In step S1411, if the comparison result is that D 1 is greater than D2, the item is unloaded if the item is already loaded and is invisible in all the grids that include the item.

In the foregoing solution, for all proxies that are loaded in the current scene, the user terminal checks whether the item is in the LoadList. If the item is not in the LoadList, the item is unloaded or concealed. Each scene item proxy object Proxy in the current LoadList is traversed. A distance D of the item from the current observation position is calculated. If D < Proxy.D, the item is loaded. That is, item resource path and position information of Proxy is read to be loaded and displayed at the position. The current LoadList is cleared.

The technical solution of the present disclosure has at least the following technical effects. By this solution, the loading and continuous display of ultra-large 3D scenes on hardware devices (for example, mobile phones) having limited capacity can be achieved by using a solution of dynamically loading and unloading the content of a scene area. Compared with other existing solutions in the industry, the most significant performance improvement of this solution is that the organization of scene into a multi-layer detail grid structure can express level of detail of different items in the scene. The items are loaded based on visible distances instead of based on uniform spatial distance without considering the level of detail for the scene area as in existing mainstream solutions, so that the loading of detailed objects that are actually invisible can be minimized, reducing memory occupation for scene loading, and reducing the complexity of graphic rendering. From a scene observation position, as a camera moves far away, tall buildings are still loaded and detailed objects gradually disappear. For a block loading solution in the related art that does not consider the level of detail, it is difficult to ensure that detailed objects disappear before tall objects. Usually, to ensure that tall buildings are observed at a long distance, the size of a loaded block is enlarged, and therefore a lot of invisible detailed items are loaded. The division and processing of a scene detail level structure of this solution are completely performed automatically. In actual applications, art designers of scenes do not need to consider the block division or block design of scene items, leading to a simple production process.

According to the foregoing descriptions of the embodiments, a person skilled in the art may clearly learn that the method according to the foregoing embodiments may be implemented by using software and a necessary general hardware platform, or certainly may be implemented by using hardware. However, in most cases, the former is a better implementation. Based on such an understanding, the essential technical solutions in the present disclosure or the part contributing to the related art may be implemented in the form of a software product. The computer software product is stored in a storage medium (for example, a read-only memory (ROM)/random access memory (RAM), a magnetic disk or an optical disc), and includes several instructions for instructing a terminal device (which may be a mobile phone, a computer, a server, a network device or the like) to perform the method described in the embodiments of the present disclosure.

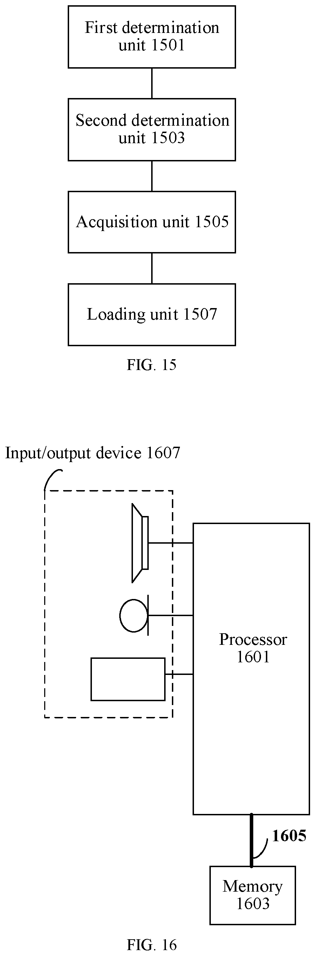

According to another aspect of the embodiments of the present disclosure, an object loading apparatus for implementing the foregoing object loading method is further provided. FIG. 15 is a schematic diagram of an optional object loading apparatus according to an embodiment of the present disclosure. As shown in FIG. 15, the apparatus may include: a first determination unit 1501, a second determination unit 1503, an acquisition unit 1505, and a loading unit 1507.

The first determination unit 1501 is configured to determine in a virtual scene a visible space located within an acquisition range of an image acquisition device, the image acquisition device being an acquisition device located at a first position in the virtual scene.

The second determination unit 1503 is configured to determine, based on the first position and in the visible space, a target subspace located within a visible distance threshold indicated by a target type of a plurality of types, each type of the plurality of types being used for indicating a visible distance threshold for an object in a subspace of the virtual scene.

The acquisition unit 1505 is configured to acquire in the target subspace an object whose visible distance is not greater than the visible distance threshold indicated by the target type as a to-be-rendered object.

The loading unit 1507 is configured to load the to-be-rendered object.

The first determination unit 1501 in this embodiment may be configured to perform S202 in the embodiment of the present disclosure, the second determination unit 1503 in this embodiment may be configured to perform S204 in the embodiment of the present disclosure, the acquisition unit 1505 in this embodiment may be configured to perform S206 in the embodiment of the present disclosure, and the loading unit 1507 in this embodiment may be configured to perform S208 in the embodiment of the present disclosure.

Implementation examples and application scenarios of the foregoing modules are the same as those of the corresponding steps, but are not limited to the content disclosed in the foregoing embodiments. The foregoing modules may be run on the hardware environment shown in FIG. 1 as a part of the apparatus, and may be implemented by software, or may be implemented by hardware.

Through the foregoing modules, a visible space located within an acquisition range of an image acquisition device in a virtual scene provided by a target application is determined; a target subspace located within a visible distance threshold indicated by a target type of a plurality of types is determined in the visible space based on the first position; an object whose visible distance is not greater than the visible distance threshold indicated by the target type in the target subspace is acquired as a to-be-rendered object; and the to-be-rendered object is loaded in a storage resource of the user terminal where the target application is installed. Because only the objects actually visible to a user are loaded, a technical problem in the related art that a relatively large quantity of hardware resources are occupied to render objects in a virtual scene can be solved, thereby significantly reducing the usage of memory resource, and reducing the consumption of hardware resources of CPU and GPU.

Optionally, the second determination unit includes: a first acquisition module, configured to acquire a spacing distance between each subspace of the visible space and the first position; and a search module, configured to determine a subspace whose spacing distance to the first position is not greater than the visible distance threshold indicated by the target type in the visible space as the target subspace.

Optionally, the acquisition unit includes: a second acquisition module, configured to acquire a configuration file. The configuration file records, for each type of the plurality of types, objects associated with the type of the plurality of types in the subspace of the virtual scene. Each object in the subspace of the virtual scene is set, according to the visible distance, to be associated with one of the plurality of types. The acquisition unit may also include a determination module, configured to acquire an object that is recorded in the configuration file as being associated with the target type in the target subspace as the to-be-rendered object.

Optionally, the loading unit includes: a first loading module, configured to remain, in a case that saved objects include the to-be-rendered object, the to-be-rendered object and delete objects other than the to-be-rendered object; and a second loading module, configured to delete, in a case that the saved objects do not include the to-be-rendered object, the saved objects and load the to-be-rendered object.

Optionally, the apparatus of the present disclosure may further include: a rendering unit, configured to: set, after the to-be-rendered object is loaded in the storage resource of the user terminal where the target application is installed, the target subspace to have grid density matching a grid density corresponding to the target type, and render the to-be-rendered object in the set target subspace. Any type of the plurality of types indicates rendering an object whose visible distance is not greater than the visible distance threshold indicated by the any type in the subspace of the virtual scene according to the grid density corresponding to the any type. The grid density corresponding to a first type of the plurality of types is greater than the grid density corresponding to a second type of the plurality of types, and the visible distance threshold indicated by the first type is less than the visible distance threshold indicated by the second type.

Optionally, the apparatus may further include: a third determination unit, configured to determine, before the visible space located in the acquisition range of the image acquisition device is determined in the virtual scene provided by the target application, a grid density corresponding to the each type of the plurality of types; and a creation unit, configured to: create , for each type of the plurality of types, configuration information according to the grid density corresponding to the type of the plurality of types, and save the configuration information of the each type of the plurality of types to the configuration file. The configuration information records, for each subspace obtained by division according to the grid density corresponding to the configuration information, an object in the subspace and a second position of the subspace.

Optionally, the foregoing third determination unit may include: a third acquisition module, configured to acquire a maximum visible distance and a minimum visible distance among visible distances of all objects in the virtual scene; and a density determination module, configured to determine, for each type of the plurality of types, the grid density corresponding to the type of the plurality of types according to the maximum visible distance and the minimum visible distance.

The foregoing third acquisition module may further be configured to: acquire the visible distance of each object in the virtual scene. For each object, the visible distance of the object is a ratio of a first product to a second product of the object, the first product being a result of multiplying a maximum value of coordinates of the object in three dimensions in a three-dimensional coordinate system by a preset parameter, the second product being a result of multiplying a screen occupation ratio threshold by twice the tangent value of a target viewing angle of the image acquisition device. The third acquisition module is further configured to search the visible distances of all the objects in the virtual scene for the maximum visible distance and the minimum visible distance.

The foregoing density determination module may further be configured to: round down a ratio of the maximum visible distance to the minimum visible distance to acquire a first threshold, the first threshold being used for representing the quantity of types of the plurality of types; and set a grid spacing represented by the grid density corresponding to the i^{th} type of the plurality of types as i times a target spacing, i being an integer greater than 0 and less than or equal to the first threshold.

The foregoing creation unit may further be configured to: determine, for each type of the plurality of types, subspace obtained by dividing the virtual scene according to the grid density corresponding to the type of the plurality of types; and search, in each subspace of the virtual scene, for an object whose visible distance matches the visible distance threshold indicated by the type in the virtual scene, and saving, for each subspace, an association relationship between the subspace and the found object into the configuration information.

Implementation examples and application scenarios of the foregoing modules are the same as those of the corresponding steps, but are not limited to the content disclosed in the foregoing embodiments. The foregoing modules may be run on the hardware environment shown in FIG. 1 as a part of the apparatus, and may be implemented by software, or may be implemented by hardware. The hardware environment includes a network environment.

According to another aspect of the embodiments of the present disclosure, a server or a terminal configured to implement the foregoing object loading method is further provided.

FIG. 16 is a structural block diagram of a terminal according to an embodiment of the present disclosure. As shown in FIG. 16, the terminal may include: one or more (only one processor is shown in FIG. 16) processors 1601, a memory 1603, and a transmission apparatus 1605. As shown in FIG. 16, the terminal may further include an input/output device 1607.

The memory 1603 may be configured to store a software program and a module, for example, a program instruction/module corresponding to the object loading method and apparatus in the embodiments of the present disclosure. The processor 1601 performs various functional applications and data processing by running the software program and the module stored in the memory 1603, so as to implement the foregoing object loading method. The memory 1603 may include a high speed random access memory, and may further include a non-volatile memory, such as one or more magnetic storage devices, a flash memory, or another non-volatile solid-state memory. In some embodiments, the memory 1603 may further include memories remotely disposed relative to the processor 1601, and these remote memories may be connected to the terminal by using a network. Examples of the network include, but are not limited to, the Internet, an intranet, a local area network, a mobile communication network, and a combination thereof.

The transmission apparatus 1605 is configured to receive or send data by means of a network, or may further be configured to transmit data between the processor and the memory. A specific example of the foregoing network may include a wired network and a wireless network. In an example, the transmission apparatus 1605 includes a network interface controller (NIC), and the NIC may be connected to another network device and a router via a network cable to communicate with the Internet or a local area network. In an example, the transmission apparatus 1605 is a radio frequency (RF) module, configured to communicate with the Internet in a wireless manner.

Specifically, the memory 1603 is configured to store an application program.

The processor 1601 may invoke, by using the transmission apparatus 1605, the application program stored in the memory 1603, to perform the following steps:
determining, in the virtual scene, a visible space located within an acquisition range of an image acquisition device, the image acquisition device being an acquisition device located at a first position;
determining, based on the first position and in the visible space, a target subspace located within a visible distance threshold indicated by a target type of a plurality of types, each type of the plurality of types being used for indicating a visible distance threshold for an object in a subspace of the virtual scene;
acquiring, in the target subspace, an object whose visible distance is not greater than the visible distance threshold indicated by the target type, as a to-be-rendered object; and
loading the to-be-rendered object.

The processor 1601 is further configured to perform the following operations:
acquiring a spacing distance between each subspace of the visible space and the first position; and
determining a subspace whose spacing distance to the first position is not greater than the visible distance threshold indicated by the target type in the visible space as the target subspace.

Optionally, for a specific example of this embodiment, reference may be made to the example described in the foregoing embodiment, and details are not described herein again in this embodiment.

A person of ordinary skill in the art may understand that the structure shown in FIG. 16 is merely an example, and the terminal may be a smartphone (for example, an Android mobile phone and an iOS mobile phone), a tablet computer, a palmtop computer, a mobile internet device (MID), a PAD, or other terminal devices. FIG. 16 does not constitute a limitation on the structure of the foregoing electronic device. For example, the terminal may further include more or fewer components (for example, a network interface and a display apparatus) than those shown in FIG. 16, or have configuration different from that shown in FIG. 16.

A person of ordinary skill in the art may understand that all or some of the steps of the methods in the foregoing embodiments may be implemented by a program instructing relevant hardware of the terminal device. The program may be stored in a computer-readable storage medium. The storage medium may include a flash disk, a read-only memory (ROM), a random access memory (RAM), a magnetic disk, an optical disc, and the like.

An embodiment of the present disclosure further provides a storage medium. Optionally, in this embodiment, the storage medium may be configured to perform program code of an object loading method.

Optionally, in this embodiment, the storage medium may be located in at least one network device in a plurality of network devices in the networks shown in the foregoing embodiments.

Optionally, in this embodiment, the storage medium is configured to store program code for performing the following steps:
determining, in a virtual scene, a visible space located within an acquisition range of an image acquisition device, the image acquisition device being an acquisition device located at a first position in the virtual scene;
determining, based on the first position and in the visible space, a target subspace located within a visible distance threshold indicated by a target type of a plurality of types, each type of the plurality of types being used for indicating a visible distance threshold for an object in a subspace of the virtual scene;
acquiring, in the target subspace, an object whose visible distance is not greater than the visible distance threshold indicated by the target type, as a to-be-rendered object; and
loading the to-be-rendered object.

Optionally, the storage medium is further configured to store program code for performing the following step:
acquiring a spacing distance between each subspace of the visible space and the first position; and
determining a subspace whose spacing distance to the first position is not greater than the visible distance threshold indicated by the target type in the visible space as the target subspace.

Optionally, for a specific example in this embodiment, reference may be made to the example described in the foregoing embodiment, and details are not described herein again in this embodiment.

Optionally, in this embodiment, the storage medium may include, but is not limited to, any medium that can store program code such as a USB flash drive, a read-only memory (ROM), a random access memory (RAM), a removable hard disk, a magnetic disk, or an optical disc.

An embodiment of the present disclosure further provides a computer program product. The computer program product includes instructions, the instructions, when run on a computer, causing the computer to perform the foregoing object loading method.

The sequence numbers of the foregoing embodiments of the present disclosure are merely for the convenience of description, and do not imply the preference among the embodiments.

When the integrated unit in the foregoing embodiments is implemented in the form of a software functional unit and sold or used as an independent product, the integrated unit may be stored in the foregoing computer-readable storage medium. Based on such an understanding, the essence of technical solution of the present disclosure, or a part contributing to the related art, or all or a part of the technical solution may be implemented in a form of a software product. The computer software product is stored in a storage medium and includes several instructions for instructing one or more computer devices (which may be a PC, a server, a network device or the like) to perform all or some of steps of the methods in the embodiments of the present disclosure.

In the foregoing embodiments of the present disclosure, descriptions of the embodiments have different emphases. As for parts that are not described in detail in one embodiment, reference can be made to the relevant descriptions of other embodiments.

In the several embodiments provided in the present disclosure, it is understood that the disclosed client may be implemented in other manners. The described apparatus embodiment is merely an example. For example, the unit division is merely logical function division and may be another division in an actual implementation. For example, a plurality of units or components may be combined or integrated into another system, or some features may be ignored or not performed. In addition, the coupling, or direct coupling, or communication connection between the displayed or discussed components may be the indirect coupling or communication connection by means of some interfaces, units, or modules, and may be in electrical or other forms.

The units described as separate parts may or may not be physically separate. Parts displayed as units may or may not be physical units, and may be located in one position, or may be distributed on a plurality of network units. Some or all of the units may be selected according to actual requirements to achieve the objectives of the solutions in the embodiments.

In addition, functional units in the embodiments of the present disclosure may be integrated into one processing unit, or each of the units may exist alone physically, or two or more units are integrated into one unit. The integrated unit may be implemented in the form of hardware, or may be implemented in the form of a software function unit.

## Claims

1. An object loading method, applied to an image processing device, the method is **characterized in** comprising:
determining (S202), in a virtual scene, a visible space located within an acquisition range of an image acquisition device, the image acquisition device being an acquisition device located at a first position in the virtual scene;
determining (S204), based on the first position and in the visible space, a target subspace located within a visible distance threshold indicated by a target type of a plurality of types, each type of the plurality of types being used for indicating a visible distance threshold for an object in a subspace of the virtual scene;
acquiring (S206), in the target subspace, an object whose visible distance is not greater than the visible distance threshold indicated by the target type as a to-be-rendered object; and
loading (S208) the to-be-rendered object,
wherein before the determining (S202), in a virtual scene, a visible space located within an acquisition range of an image acquisition device, the method further comprising:
determining, for each type of the plurality of types, a grid density corresponding to the type of the plurality of types; and
creating, for each type of the plurality of types, configuration information according to the grid density corresponding to the type of the plurality of types, and saving the configuration information of each type of the plurality of types to a configuration file, wherein the configuration information records, for each subspace obtained by division according to the grid density corresponding to the configuration information, an object in the subspace and a second position of the subspace;
wherein the determining, for each type of the plurality of types, a grid density corresponding to the type of the plurality of types comprises:
acquiring a maximum visible distance and a minimum visible distance among visible distances of all objects in the virtual scene; and
determining, for each type of the plurality of types, the grid density corresponding to the type of the plurality of types according to the maximum visible distance and the minimum visible distance;
wherein the acquiring a maximum visible distance and a minimum visible distance among visible distances of all objects in the virtual scene comprises:
acquiring the visible distance of each object in the virtual scene, wherein for each object, the visible distance of the object is a ratio of a first product to a second product of the object, the first product is a result of multiplying a maximum value of coordinates of the object in three dimensions in a three-dimensional coordinate system by a preset parameter, the second product is a result of multiplying a screen occupation ratio threshold of the object by twice the tangent value of a target viewing angle of the image acquisition device; and
searching the visible distances of all the objects in the virtual scene for the maximum visible distance Dmax and the minimum visible distance Dmin,
wherein the determining, for each type of the plurality of types, the grid density corresponding to the type of the plurality of types according to the maximum visible distance and the minimum visible distance comprises:
rounding down a ratio of the maximum visible distance to the minimum visible distance to acquire a first threshold, the first threshold being used for representing a quantity of types of the plurality of types; and
setting a grid spacing represented by the grid density corresponding to the i^{th} type of the plurality of types as i times a target spacing, i being an integer greater than 0 and less than or equal to the first threshold, wherein the target spacing is calculated as: (Dmax - Dmin)/Dmin,
wherein the visible distance threshold indicated by the i^{th} type is Dmin+i*(Dmax-Dmin)/m, where m represents a predetermined number of equal divisions of the difference between the maximum visible distance and the minimum visible distance,
wherein the creating, for each type of the plurality of types, configuration information according to the grid density corresponding to the type of the plurality of types comprises:
determining, for each type of the plurality of types, subspaces obtained by dividing the virtual scene according to the grid density corresponding to the type of the plurality of types; and
searching, in each subspace of the virtual scene, for an object whose visible distance matches the visible distance threshold indicated by the type of the plurality of types, and saving, for each subspace, an association relationship between the subspace and the found object into the configuration information,
wherein the acquiring (S206), in the target subspace, an object whose visible distance is not greater than the visible distance threshold indicated by the target type as a to-be-rendered object comprises:
acquiring the configuration file; and
acquiring an object that is recorded in the configuration file as being associated with the target type in the target subspace, as the to-be-rendered object.

2. The method according to claim 1, wherein the determining (S202), in the visible space, a target subspace located within a visible distance threshold indicated by a target type of a plurality of types based on the first position comprises:
acquiring a spacing distance between each subspace of the visible space and the first position; and
determining a subspace whose spacing distance to the first position is not greater than the visible distance threshold indicated by the target type in the visible space as the target subspace.

3. The method according to claim 1, wherein the loading (S208) the to-be-rendered object comprises:
in a case that objects currently saved in storage resources of a user terminal comprise the to-be-rendered object, keeping the to-be-rendered object in the storage resources of the user terminal and deleting objects other than the to-be-rendered object from the storage resources of the user terminal; and
in a case that the objects currently saved in the storage resources of the user terminal do not comprise the to-be-rendered object, deleting the objects currently saved in the storage resources of the user terminal and loading the to-be-rendered object.

4. The method according to claim 1, after the loading (S208) the to-be-rendered object, further comprising:
setting the target subspace to have a grid density matching a grid density corresponding to the target type, and rendering the to-be-rendered object in the set target subspace, wherein any type of the plurality of types indicates rendering an object whose visible distance is not greater than the visible distance threshold indicated by the any type in the subspace of the virtual scene according to the grid density corresponding to the any type, the grid density corresponding to a first type of the plurality of types is greater than the grid density corresponding to a second type of the plurality of types, the visible distance threshold indicated by the first type is less than the visible distance threshold indicated by the second type.

5. A storage medium, the storage medium storing programs, the programs, when run, performing the method according to any one of claims 1 to 4.

6. An electronic device, comprising a memory, a processor, and a computer program that is stored in the memory and executable by the processor, wherein the processor is configured to perform the method according to any one of claims 1 to 4 by executing the computer program.

7. A computer program product, comprising instructions, the instructions, when run on a computer, causing the computer to perform the object loading method according to any one of claims 1 to 4.

## Patentansprüche

1. Verfahren zum Laden von Objekten, angewandt in einem Bildverarbeitungsverfahren, wobei das Verfahren **dadurch gekennzeichnet ist, dass** es Folgendes umfasst:
Bestimmen (S202) eines sichtbaren Raumes, der sich in einem Erfassungsbereich einer Bilderfassungsvorrichtung befindet, in einer virtuellen Szene, wobei sich die Bilderfassungsvorrichtung an einer ersten Position in der virtuellen Szene befindet,
Bestimmen (S204), basierend auf der ersten Position und in den sichtbaren Raum, eines Zielteilraumes, der sich in innerhalb eines Schwellenwertes sichtbarer Distanz befindet, der durch eine Zielart einer Vielzahl von Arten angegeben ist, wobei jede Art der Vielzahl von Arten verwendet wird, um einen Schwellenwert sichtbarer Distanz für ein Objekt in einem Teilraum der virtuellen Szene anzugeben,
Erfassen (S206) eines Objekts in dem Zielteilraum, dessen sichtbare Distanz nicht größer als der durch die Zielart angegebene Schwellenwert sichtbarer Distanz ist, als ein zu renderndes Objekt und
Laden (S208) des zu rendernden Objekts,
wobei das Verfahren vor dem Bestimmen (S202) eines sichtbaren Raumes, der sich in einem Erfassungsbereich einer Bilderfassungsvorrichtung befindet, in einer virtuellen Szene ferner Folgendes umfasst:
Bestimmen einer Gitterdichte, die der Art der Vielzahl von Arten entspricht, für jede Art der Vielzahl von Arten und
Erzeugen von Konfigurationsinformationen für jede Art der Vielzahl von Arten gemäß der Gitterdichte, die der Art der Vielzahl von Arten entspricht, und Speichern der Konfigurationsinformationen für jede Art der Vielzahl von Arten in einer Konfigurationsdatei, wobei die Konfigurationsinformationen für jeden Teilraum, der durch Teilen gemäß der Gitterdichte, die der Art der Vielzahl von Arten entspricht, gewonnen wird, ein Objekt in dem Teilraum und eine zweite Position des Teilraums aufzeichnen,
wobei das Bestimmen einer Gitterdichte, die der Art der Vielzahl von Arten entspricht, für jede Art der Vielzahl von Arten Folgendes umfasst:
Erfassen einer maximalen sichtbaren Distanz und einer minimalen sichtbaren Distanz aus sichtbaren Distanzen aller Objekte in der virtuellen Szene und
Bestimmen der Gitterdichte, die der Art der Vielzahl von Arten entspricht, für jede Art der Vielzahl von Arten gemäß der maximalen sichtbaren Distanz und der minimalen sichtbaren Distanz,
wobei das Erfassen einer maximalen sichtbaren Distanz und einer minimalen sichtbaren Distanz aus sichtbaren Distanzen aller Objekte in der virtuellen Szene Folgendes umfasst:
Erfassen der sichtbaren Distanz jedes Objekts in der virtuellen Szene, wobei für jedes Objekt die sichtbare Distanz des Objekts ein Verhältnis eines ersten Produkts zu einem zweiten Produkt des Objekts ist, wobei das erste Produkt ein Ergebnis des Multiplizierens eines maximalen Wertes von Koordinaten des Objekts in drei Dimensionen in einem dreidimensionalen Koordinatensystem mit einem voreingestellten Parameter ist, das zweite Produkt ein Ergebnis des Multiplizierens eines Schwellenwertes eines Bildschirmbelegungsverhältnisses des Objekts mit dem Zweifachen des Tangentenwertes eines Zielbetrachtungswinkels der Bilderfassungsvorrichtung ist, und
Durchsuchen der sichtbaren Distanzen aller Objekte in der virtuellen Szene nach der maximalen sichtbaren Distanz Dmax und der minimalen sichtbaren Distanz Dmin,
wobei das Bestimmen der Gitterdichte, die der Art der Vielzahl von Arten entspricht, für jede Art der Vielzahl von Arten gemäß der maximalen sichtbaren Distanz und der minimalen sichtbaren Distanz Folgendes umfasst:
Abrunden eines Verhältnisses der maximalen sichtbaren Distanz auf die minimale sichtbare Distanz, um einen ersten Schwellenwert zu erfassen, wobei der erste Schwellenwert verwendet wird, um eine Menge der Arten der Vielzahl von Arten darzustellen, und
Einstellen eines Gitterabstands, der durch die Gitterdichte dargestellt wird, die der i. Art der Vielzahl von Arten entspricht, als das i-Fache eines Zielabstands, wobei i eine ganze Zahl größer als 0 und kleiner oder gleich dem ersten Schwellenwert ist, wobei der Zielabstand wie folgt berechnet wird: (Dmax - Dmin)/Dmin,
wobei der Schwellenwert sichtbarer Distanz, der durch die i. Art angegeben wird, Dmin + i * (Dmax - Dmin)/m ist, wobei m eine festgelegte Anzahl gleicher Divisionen der Differenz der Differenz zwischen der maximalen sichtbaren Distanz und der minimalen sichtbaren Distanz darstellt,
wobei das Erzeugen von Konfigurationsinformationen für jede Art der Vielzahl von Arten gemäß der Gitterdichte, die der Art der Vielzahl von Arten entspricht, Folgendes umfasst:
Bestimmen von Teilräumen, die durch Teilen der virtuellen Szene gemäß der Gitterdichte, die der Art der Vielzahl von Arten entspricht, für jede Art der Vielzahl von Arten erzielt werden, und
Durchsuchen jedes Teilraumes der virtuellen Szene nach einem Objekt, dessen sichtbare Distanz mit dem Schwellenwert sichtbarer Distanz übereinstimmt, der durch die Art der Vielzahl von Arten angegeben wird, und Speichern eines Zugehörigkeitsverhältnisses zwischen dem Teilraum und dem gefundenen Objekt in die Konfigurationsinformationen für jeden Teilraum,
wobei das Erfassen (S206) eines Objekts in dem Zielteilraum, dessen sichtbare Distanz nicht größer als der durch die Zielart angegebene Schwellenwert sichtbarer Distanz ist, als ein zu renderndes Objekt, Folgendes umfasst:
Erfassen der Konfigurationsdatei und
Erfassen eines Objekts, das in der Konfigurationsdatei als der Zielart des Zielteilraumes zugehörig aufgezeichnet ist, als das zu rendernde Objekt.

2. Verfahren nach Anspruch 1, wobei das Bestimmen (S202) eines Zielteilraumes in dem sichtbaren Raum, der sich in innerhalb eines Schwellenwertes sichtbarer Distanz befindet, der durch eine Zielart einer Vielzahl von Arten angegeben ist, basierend auf der ersten Position Folgendes umfasst:
Erfassen einer Abstandsdistanz zwischen jedem Teilraum des sichtbaren Raumes und der ersten Position und
Bestimmen eines Teilraumes, dessen Abstandsdistanz zu der ersten Position nicht größer als der Schwellenwert sichtbarer Distanz ist, der durch die Zielart in dem sichtbaren Raum angegeben wird, als den Zielteilraum.

3. Verfahren nach Anspruch 1, wobei das Laden (S208) des zu rendernden Objekts Folgendes umfasst:
wenn die Objekte, die gegenwärtig in Speicherressourcen eines Benutzerendgeräts gespeichert sind, das zu rendernde Objekt umfassen, Halten des zu rendernden Objekts in den Speicherressourcen des Benutzerendgeräts und Löschen von anderen Objekten, die keine zu rendernden Objekte sind, aus den Speicherressourcen des Benutzerendgeräts, und
wenn die Objekte, die gegenwärtig in den Speicherressourcen des Benutzerendgeräts gespeichert sind, das zu rendernde Objekt nicht umfassen, Löschen der Objekte, die gegenwärtig in den Speicherressourcen des Benutzerendgeräts gespeichert sind, und Laden des zu rendernden Objekts.

4. Verfahren nach Anspruch 1, nach dem Laden (S208) des zu rendernden Objekts ferner Folgendes umfassend:
Einstellen des Zielteilraums derart, dass er eine Gitterdichte aufweist, die mit einer Gitterdichte übereinstimmt, die der Zielart entspricht, und Rendern des zu rendernden Objekts in dem Zielteilraum, wobei eine beliebige Art der Vielzahl von Arten das Rendern eines Objekts angibt, dessen sichtbare Distanz nicht größer als der Schwellenwert sichtbarer Distanz ist, der gemäß der Gitterdichte, die der beliebigen Art entspricht, durch die beliebige Art in dem Teilraum der virtuellen Szene angegeben wird, wobei die Gitterdichte, die einer ersten Art der Vielzahl von Arten entspricht, größer als die Gitterdichte ist, die einer zweiten Art der Vielzahl von Arten entspricht, wobei der Schwellenwert sichtbarer Distanz, der durch die erste Art angegeben wird, kleiner als der Schwellenwert sichtbarer Distanz ist, der durch die zweite Art angegeben wird.

5. Speichermedium, wobei das Speichermedium Programme speichert, die, wenn sie abgearbeitet werden, das Verfahren nach einem der Ansprüche 1 bis 4 durchführen.

6. Elektronisches Gerät, einen Speicher, einen Prozessor und ein Computerprogramm umfassend, das in dem Speicher gespeichert ist und von dem Prozessor ausgeführt werden kann, wobei der Prozessor dafür konfiguriert ist, das Verfahren nach einem der Ansprüche 1 bis 4 durch Ausführen des Computerprogramms durchzuführen.

7. Computerprogrammprodukt, Anweisungen umfassend, wobei die Anweisungen, wenn sie auf einem Computer abgearbeitet werden, den Computer veranlassen, das Verfahren zum Laden von Objekten nach einem der Ansprüche 1 bis 4 durchführen.

## Revendications

1. Procédé de chargement d'objet, appliqué à un dispositif de traitement d'image, le procédé étant **caractérisé en ce qu'**il comprend :
la détermination (S202), dans une scène virtuelle, d'un espace visible situé dans une plage d'acquisition d'un dispositif d'acquisition d'image, le dispositif d'acquisition d'image étant un dispositif d'acquisition situé à une première position dans la scène virtuelle ;
la détermination (S204), sur la base de la première position et dans l'espace visible, d'un sous-espace cible situé dans un seuil de distance visible indiqué par un type de cible d'une pluralité de types, chaque type de la pluralité de types étant utilisé pour indiquer un seuil de distance visible pour un objet dans un sous-espace de la scène virtuelle ;
l'acquisition (S206), dans le sous-espace cible, d'un objet dont la distance visible n'est pas supérieure au seuil de distance visible indiqué par le type de cible comme objet à restituer ; et
le chargement (S208) de l'objet à restituer,
sachant que, avant la détermination (S202), dans une scène virtuelle, d'un espace visible situé dans une plage d'acquisition d'un dispositif d'acquisition d'image, le procédé comprend en outre :
la détermination, pour chaque type de la pluralité de types, d'une densité de grille correspondant au type de la pluralité de types ; et
la création, pour chaque type de la pluralité de types, d'informations de configuration selon la densité de grille correspondant au type de la pluralité de types, et la sauvegarde des informations de configuration de chaque type de la pluralité de types dans un fichier de configuration, les informations de configuration enregistrant, pour chaque sous-espace obtenu par division selon la densité de grille correspondant aux informations de configuration, un objet dans le sous-espace et une deuxième position du sous-espace ;
la détermination, pour chaque type de la pluralité de types, d'une densité de grille correspondant au type de la pluralité de types comprenant :
l'acquisition d'une distance visible maximale et d'une distance visible minimale parmi les distances visibles de tous les objets de la scène virtuelle ; et
la détermination, pour chaque type de la pluralité de types, de la densité de grille correspondant au type de la pluralité de types en fonction de la distance visible maximale et de la distance visible minimale ;
l'acquisition d'une distance visible maximale et d'une distance visible minimale parmi les distances visibles de tous les objets dans la scène virtuelle comprenant :
l'acquisition de la distance visible de chaque objet dans la scène virtuelle, la distance visible de l'objet étant pour chaque objet un rapport d'un premier produit à un second produit de l'objet, le premier produit étant le résultat de la multiplication d'une valeur maximale de coordonnées de l'objet en trois dimensions dans un système de coordonnées tridimensionnelles par un paramètre prédéfini, le second produit résultant de la multiplication d'un seuil de taux d'occupation de l'écran de l'objet par deux fois la valeur tangente d'un angle de vue cible du dispositif d'acquisition d'images ; et
la recherche des distances visibles de tous les objets de la scène virtuelle pour la distance visible maximale Dmax et la distance visible minimale Dmin, la détermination, pour chaque type de la pluralité de types, de la densité de grille correspondant au type de la pluralité de types en fonction de la distance visible maximale et de la distance visible minimale comprenant :
l'arrondi vers le bas d'un rapport de la distance visible maximale à la distance visible minimale pour acquérir un premier seuil, le premier seuil étant utilisé pour représenter une quantité de types de la pluralité de types ; et
la définition d'un espacement de grille représenté par la densité de grille correspondant au i^{ième} type de la pluralité de types comme i fois un espacement cible, i étant un entier supérieur à 0 et inférieur ou égal au premier seuil, l'espacement cible étant calculé comme suit : (Dmax - Dmin)/Dmin,
le seuil de distance visible indiqué par le i^{ième} type étant Dmin+i*(Dmax-Dmin)/m, où m représente un nombre prédéterminé de divisions égales de la différence entre la distance visible maximale et la distance visible minimale, la création, pour chaque type de la pluralité de types, d'informations de configuration en fonction de la densité de grille correspondant au type de la pluralité de types comprenant :
la détermination, pour chaque type de la pluralité de types, de sous-espaces obtenus en divisant la scène virtuelle selon la densité de grille correspondant au type de la pluralité de types ; et
la recherche, dans chaque sous-espace de la scène virtuelle, d'un objet dont la distance visible correspond au seuil de distance visible indiqué par le type de la pluralité de types, et la sauvegarde, pour chaque sous-espace, d'une relation d'association entre le sous-espace et l'objet trouvé dans la formation de configuration,
l'acquisition (S206), dans le sous-espace cible, d'un objet dont la distance visible n'est pas supérieure au seuil de distance visible indiqué par le type de cible en tant qu'objet à restituer comprenant :
l'acquisition du fichier de configuration ; et
l'acquisition d'un objet qui est enregistré dans le fichier de configuration comme étant associé au type de cible dans le sous-espace cible, en tant qu'objet à restituer.

2. Procédé selon la revendication 1, dans lequel la détermination (S202), dans l'espace visible, d'un sous-espace cible situé dans un seuil de distance visible indiqué par un type de cible d'une pluralité de types sur la base de la première position comprend :
l'acquisition d'une distance d'espacement entre chaque sous-espace de l'espace visible et la première position ; et
la détermination d'un sous-espace dont la distance d'espacement par rapport à la première position n'est pas supérieure au seuil de distance visible indiqué par le type de cible dans l'espace visible en tant que sous-espace cible.

3. Procédé selon la revendication 1, dans lequel le chargement (S208) de l'objet à restituer comprend :
dans le cas où les objets actuellement sauvegardés dans les ressources de stockage du terminal utilisateur ne comprennent pas l'objet à restituer, le maintien de l'objet à restituer dans les ressources de stockage du terminal d'utilisateur et la suppression des objets autres que l'objet à restituer dans les ressources de stockage du terminal d'utilisateur ;
dans le cas où les objets actuellement sauvegardés dans les ressources de stockage du terminal d'utilisateur ne comprennent pas l'objet à restituer, la suppression des objets actuellement sauvegardés dans les ressources de stockage du terminal d'utilisateur et le chargement de l'objet à restituer.

4. Procédé selon la revendication 1, après le chargement (S208) de l'objet à restituer, comprenant en outre :
la définition du sous-espace cible pour avoir une densité de grille correspondant à une densité de grille correspondant au type de cible, et le rendu de l'objet à restituer dans le sous-espace cible défini, tout type de la pluralité de types indiquant le rendu d'un objet dont la distance visible n'est pas supérieure au seuil de distance visible indiqué par le type quelconque dans le sous-espace de la scène virtuelle selon la densité de grille correspondant au type quelconque, la densité de grille correspondant à un premier type de la pluralité de types étant supérieure à la densité de grille correspondant à un second type de la pluralité de types, le seuil de distance visible indiqué par le premier type étant inférieur au seuil de distance visible indiqué par le second type.

5. Support de stockage, le support de stockage stockant des programmes, les programmes, lorsqu'ils sont exécutés, exécutant le procédé selon l'une quelconque des revendications 1 à 4.

6. Dispositif électronique, comprenant une mémoire, un processeur et un programme informatique qui est stocké dans la mémoire et exécutable par le processeur, dans lequel le processeur est configuré pour exécuter le procédé selon l'une quelconque des revendications 1 à 4 en exécutant le programme informatique.

7. Produit de programmation informatique, comprenant des instructions, les instructions, lorsqu'elles sont exécutées sur un ordinateur, amenant l'ordinateur à exécuter le procédé de chargement d'objet selon l'une quelconque des revendications 1 à 4.
